# EUROPEAN PATENT APPLICATION

(11) **EP 4 663 585 A2**
(43) Date of publication of application: **17.12.2025**
(21) Application number: 25212575.2
(22) Date of filing: 15.01.2021
(51) Int. Cl.: B65G 49/08

(54) **METHOD AND APPARATUS FOR STORING SLABS**

(30) Priority: 04.02.2020 IT 202000002137
(62) Divisional of application: 21151772.7
(71) Applicant: Granitifiandre Societa' Per Azioni, 42014 Castellarano (RE) (IT)
(72) Inventor: MARCHI, Domenico, 42031 BAISO (RE) (IT)
(74) Representative: Corradini, Cesare

(57) **Abstract**

The invention describes a method for storing slabs (L) singularly equipped with two opposite main faces and with a plurality of lateral flanks, wherein the method comprises the steps of: loading at least one slab (L) on a self-propelled trolley (200), carrying said slab (L) through the self-propelled trolley (200) to a storage warehouse (105), picking up the slab (L) from the self-propelled trolley (200) through a manipulator (400), and depositing the slab (L) on a shelf (120) of the storage warehouse (105) through the manipulator (400).

## Description

### Technical field

The present invention relates to a method and a relative apparatus for storing slabs, in particular made of ceramic, for example ceramic slabs of large dimensions, which can be treated both as finished manufactured products intended to be packaged and commercialised, and as semi-worked products intended to be cut into smaller tiles or subjected to other processing.

### State of the art

In the ceramics industry the productive concept of making ceramic slabs of large dimensions that, for some particular uses, can be commercialised as such but that, in general, are used as semi-worked products to be cut into tiles of smaller dimensions and possibly of various formats according to the contingent requirements of customers is currently known.

After the usual forming and firing steps, these ceramic slabs are generally loaded onto a special pallet, generally made of metallic material, which is capable of carrying a pile of ceramic slabs stacked on top of one another.

Through a fork-lift truck, the pallet is picked up from the production area and transported into a storage area where it is left to stand, possibly on suitable shelves or simply on top of other analogous pallets.

A first problem of this storage technique is given precisely by the fact that the ceramic slabs are stored together with the relative pallet, with the consequence that, in the case in which there is an increase in production and therefore in ceramic slabs to be stored, it is necessary to have a greater number of pallets with a consequent worsening of costs. A second drawback is given by the fact that the storage of ceramic slabs together with the relative pallets worsens the exploitation of the space available inside the storage areas, precisely because each pallet occupies a non-negligible volume that cannot be exploited to store other ceramic slabs.

### Presentation of the invention

A purpose of the present invention is to overcome the aforementioned drawbacks of the prior art thanks to a method for storing slabs, for example ceramic slabs, that makes it possible to optimise the spaces occupied and that can be obtained with relatively low costs.

A further purpose is to achieve the aforementioned goal with a simple and rational solution.

These and other purposes are accomplished thanks to the characteristics of the invention given in the independent claims. The dependent claims represent preferred and/or particularly advantageous characteristics, but not strictly necessary to obtain the invention. In particular, an embodiment of the present invention provides a method for storing slabs, preferably ceramic slabs, singularly equipped with two opposite main faces and with a plurality of lateral flanks, wherein the method comprises the steps of:
- loading at least one slab on a self-propelled trolley,
- carrying said slab through the self-propelled trolley to a storage warehouse,
- picking up the slab from the self-propelled trolley through a manipulator, and
- depositing the slab on a shelf of the storage warehouse through the manipulator.

Thanks to this solution the slabs can be accumulated and stored inside the storage warehouse totally independently from any pallet or other support member.

Indeed, for example after the usual forming and firing steps, the slabs can be immediately loaded on the self-propelled trolley, which transfers them to the storage warehouse where the manipulator picks them up from the trolley and deposits them on the shelf.

In particular, it is possible to provide that the self-propelled trolley be loaded with a single slab at a time or, more preferably, with a plurality of slabs simultaneously, which can be stacked on top of one another to form a pile.

The slab or the pile of slabs can be loaded directly resting on a support plane of the self-propelled trolley, without any intermediate element.

Possibly, between the slab or the pile of slabs and said support plane it is possible to arrange a suitable support, for example a shelf made of metal, plastic, card or any other material, which can have the function of protecting the slab or the pile of slabs from scratches and/or other damage during loading and transportation.

Alternatively, it is also possible to provide that, for example after the usual forming and firing steps, the slabs e be loaded on a pallet, for example on a conventional pallet of metallic material of the type outlined earlier, which can be already loaded on the self-propelled trolley, or can be loaded on the self-propelled trolley afterwards, to finally be transported to the storage warehouse.

Also in this case it is still provided for the manipulator to pick up the slab(s) from the self-propelled trolley leaving the pallet thereof, so that the pallet is not stored by can be taken back into the loading area to be reused with other slabs.

According to an aspect of the invention, the self-propelled trolley can be a vehicle without guide rails, i.e. a vehicle that is not mechanically coupled with any physical rail that determines the path thereof.

Thanks to this solution, the path followed by the self-propelled trolley can be modified in a very simple and flexible manner based on the contingent needs and/or the nearby characteristics, for example in the case in which the layout of the storage warehouse, of the production area or in general of the building being worked in is changed.

The absence of rails also makes it possible to simplify the management of the transits if the storage method makes use of a plurality of self-propelled trolleys that operate simultaneously, and does not create obstacles that could hinder the movements in the building of people or of further devices/vehicles intended for other purposes and/or other functions.

According to another aspect of the invention, the self-propelled trolley can be an automated guided vehicle (AGV).

In this way, the movements and the activities of the self-propelled trolley take place totally autonomously (generally managed by a pre-set electronic control system), without requiring the direct intervention of any human operator.

The automated guide system implemented in the self-propelled trolley can be of any type, for example it can be selected in the group consisting of: a laser guiding system, a radio guiding system (for example wired), a magnetic guiding system (for example using magnets or magnetic bands), an optical guiding system (for example using a coloured band or artificial viewing), an inertia guiding system (for example gyroscopic), a GPS guiding system.

According to another aspect of the invention, the slab can be loaded on the self-propelled trolley so as to place it to rest on one of the main faces thereof.

Thanks to this solution, the slab loaded on the self-propelled trolley (with or without the interposition of a pallet or other support) can take up a horizontal or almost horizontal orientation, which improves the stability thereof during the transportation steps.

In particular, if a pile of slabs is loaded on the self-propelled trolley, this orientation ensures that they are stacked substantially vertically and thus that they are firmer.

According to another aspect of the invention, the step of depositing the slab on the shelf can provide for placing the slab resting on one of the lateral flanks thereof.

Thanks to this solution, the slab arranged on the shelf can take up a vertical or almost vertical orientation, which improves the occupation of space in the storage warehouse and decreases the unusable spaces thereof, at the same time making such a storage warehouse particularly versatile and functional.

Indeed, especially in the case of slabs of large dimensions, a horizontal arrangement thereof would mean occupying a correspondingly very large storage area, sometimes not compatible with the spaces available in the building.

On the other hand, by arranging the slabs vertically or almost vertically, each slab occupies a much smaller storage area, which thus makes it possible to store numerous slabs in even relatively small areas.

Another aspect of the invention provides that the storage warehouse can comprise at least two shelving units arranged side-by-side and separated by an aisle, that the step of carrying the slab to the storage warehouse provides for guiding the self-propelled trolley to move inside and along said aisle, and that the slab can be deposited by the manipulator on each of the shelves that delimit said aisle.

As well as allowing better exploitation of the space available inside the storage warehouse, this solution has the advantage of allowing a single manipulator to serve two shelves, simplifying and reducing the costs of the system.

According to further aspect of the invention, the manipulator can be a robot equipped with a gripping member for gripping and holding the slab.

This solution has the advantage of allowing the manipulator to pick up the slab in multiple positions and orientations, and to be able to impose multiple movements on it before releasing it on the shelf, thereby ensuring high efficiency and flexibility of operation.

In order to maximise this flexibility of operation, a preferred aspect of the invention provides that the robot can be an anthropomorphous robot, for example an anthropomorphous robot having at least six axes.

However, this does not rule out the possibility that, in other embodiments, the anthropomorphous robot can be replaced by another type of robot, for example by a Cartesian robot.

According to an aspect of the invention, the robot can be installed on a support trolley that is moveable with respect to the storage warehouse.

Thanks to this solution, the robot can be moved to serve different areas of the storage warehouse, without the need to increase the number of robots and thus the structural complexity and the costs of the system.

In particular, in the case in which the storage warehouse comprises at least the two shelves outlined earlier, the support trolley of the robot can be moveable inside and along the aisle delimited by said shelves.

According to an aspect of the invention, the support trolley of the robot can be a vehicle on rails, i.e. a vehicle mechanically coupled with at least one physical rail that determines the path thereof.

In this way, the movements and the positioning of the support trolley can be very precise and accurate, simplifying the control of the robot that is mounted on it.

In this context, the rail(s) of the support trolley of the robot can be installed for example on a floor of the automatic store or in raised position, for example above the shelf or possibly on a ceiling of the store itself.

In order to simplify the layout of the system and make the operation thereof more flexible, an alternative aspect of the invention however provides for the possibility that the support trolley of the robot is a vehicle without guide rails, i.e. a vehicle that is not mechanically coupled with any physical rail that determines the path thereof.

For example, the support trolley can be an automated guided vehicle (AGV).

Also in this case, the automated guiding system implemented in the support trolley can be of any type, for example it can be selected in the group consisting of: a laser guiding system, a radio guiding system (for example using a wire), a magnetic guiding system (for example using magnets or magnetic bands), an optical guiding system (for example using a coloured band or artificial viewing), an inertia guiding system (for example gyroscopic), a GPS guiding system.

In order to unload the slabs from the storage warehouse, a further aspect of the invention provides that the method can operate in reverse with respect to what was outlined earlier, i.e. that it can comprise the steps of:
- picking up a slab from the shelf of the storage warehouse with the manipulator;
- depositing the slab on the self-propelled trolley with the manipulator, and
- transporting the slab through the self-propelled trolley away from the storage warehouse.

This solution ensures that the storage warehouse can operate completely without the need to provide further devices, simplifying the system and reducing the costs.

Another embodiment of the invention finally provides an apparatus for storing slabs, preferably ceramic slabs, singularly equipped with two opposite main faces and with a plurality of lateral flanks, wherein said apparatus comprises:
- a storage warehouse,
- a self-propelled trolley adapted for being loaded and for carrying one or more slabs,
- a manipulator adapted for releasably picking up a slab from the self-propelled trolley, and
- an electronic control system of the self-propelled trolley and of the manipulator and configured to carry out the steps of the method according to any one of the previous claims.

This embodiment substantially achieves the same advantages as the method outlined above, in particular that of allowing the storage of the slabs without the relative pallets or other supports, reducing the costs and improving the exploitation of the spaces.

Of course, all of the particular aspects of the invention previously outlined for the method are also meant to be applicable to the corresponding apparatus.

### Brief description of the drawings

Further characteristics and advantages of the invention will become clearer from reading the following description provided as a non-limiting example, with the help of the figures illustrated in the attached tables.
Figure 1 is a partial perspective view of an apparatus for storing slabs according to an embodiment of the present invention.
Figure 2 is a partial plan view of the apparatus of figure 1.
Figure 3 is a partial side view of the apparatus of figure 1.
Figure 4 is a front view (from the right) of the apparatus of figure 1.
Figure 5 is the view of figure 4 relative to a variant of the apparatus of figure 1.
Figure 6 is a partial perspective view of an apparatus for storing slabs in accordance with a second embodiment of the present invention.
Figure 7 is a front view (from the right) of the apparatus of figure 6.
Figure 8 is a partial perspective view of an apparatus for storing slabs in accordance with a third embodiment of the present invention.
Figure 9 is a partial plan view of the apparatus of figure 8.
Figure 10 is a front view (from the right) of the apparatus of figure 8.
Figure 11 is a partial side view of the apparatus of figure 8.
Figure 12 is a partial perspective view of an apparatus for storing slabs in accordance with a fourth embodiment of the present invention.
Figure 13 is a front view (from the right) of the apparatus of figure 12.

### Detailed description

In the aforementioned figures reference numeral 100 globally indicates an apparatus for storing ceramic slabs L, preferably ceramic slabs of large format.

However, this does not rule out the possibility that the apparatus 100 can be used to store other types of slabs, for example slabs of natural stone, like marble, granite or similar, or slabs of glass or similar.

Each ceramic slab L generally has a pair of flat main faces that are parallel and opposite one another, one of which is an upper (or visible) main face and a lower (or resting) main face.

The main faces can have a quadrangular shape, preferably rectangular, and can have dimensions for example substantially comprised between 3-4 metres x 1-1.7 metres.

The main faces extend on planes that are substantially perpendicular with respect to the thickness of the ceramic slab L, which is smaller (generally much smaller) with respect to the dimensions of the main faces, for example substantially less than 0.03 metres.

Each ceramic slab L also has a plurality of lateral flanks that extend in the direction of the thickness and that perimetrically delimit the main faces, with respect to which they are substantially undercut.

For example, each ceramic slab L can comprise four pairs of lateral flanks that are parallel and in opposite pairs.

The apparatus 100 comprises a storage warehouse 105 adapted for storing a plurality of ceramic slabs L.

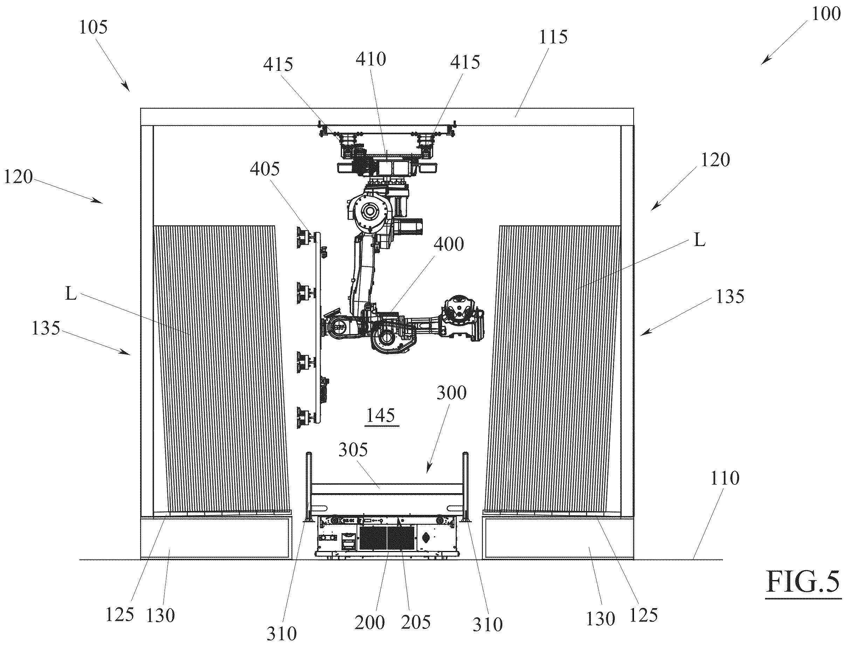

The storage warehouse 105 occupies a predetermined storage area, which can be vertically delimited between a floor 110 and possibly a cover 115 (see fig. 5).

The storage warehouse 105 comprises one or more shelves 120 singularly adapted for receiving a plurality of ceramic slabs L.

In the illustrated embodiment, each shelf 120 has a horizontal support plane 125, which can be defined by one or more covering panels supported by a plurality of horizontal bars 130, for example parallel to one another and side-by-side, which can be rested directly on the floor 110.

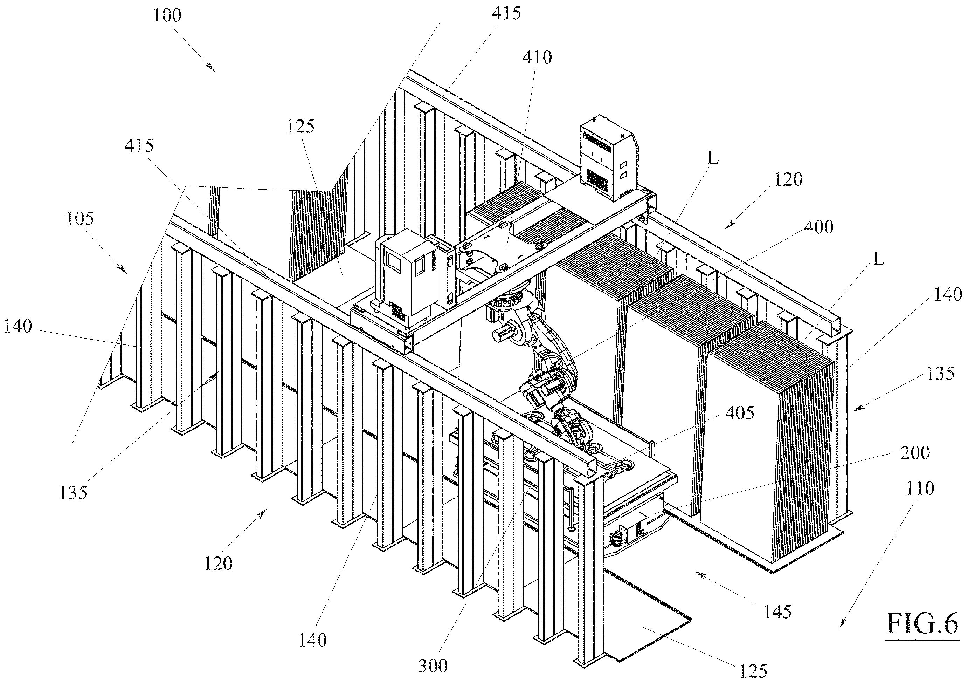

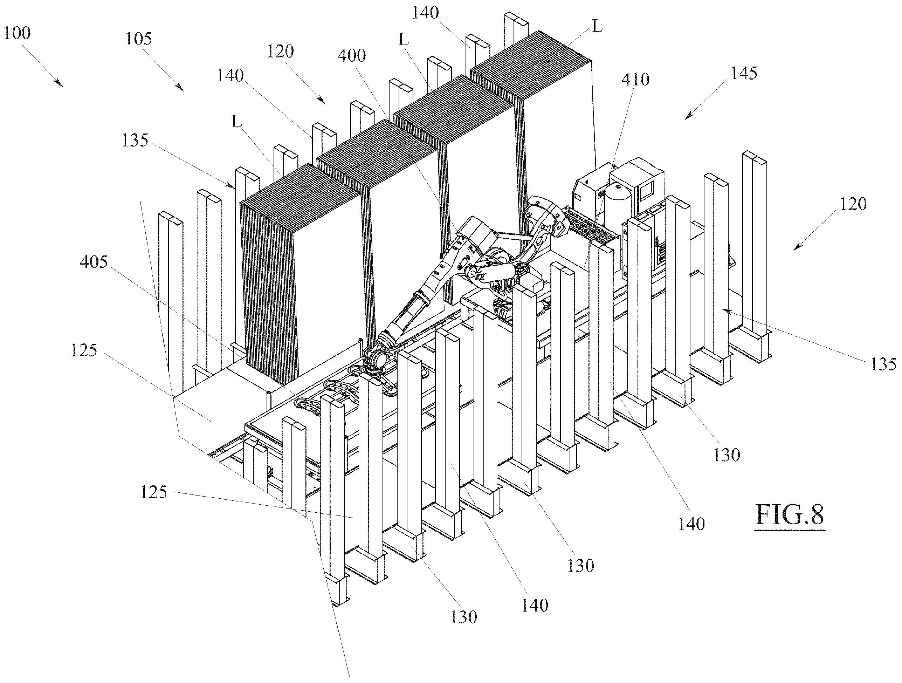

However, this does not rule out the possibility that, in other embodiments, the covering panels can be absent and that the support plane 125 is defined directly by the plurality of horizontal bars 130, or that the horizontal bars 130 are absent and that the covering panels are directly rested on the floor 110 (see for example figure 6 and 8).

Some embodiments could also provide that the support plane 125 is directly defined by a portion of the floor 110, without interposition of any intermediate element.

The shelf 120 can also comprise a rear edge 135 that rises up from the support plane 125.

The rear edge 135 can for example be vertical or at most slightly inclined with respect to the vertical by an acute angle (less than a right angle), for example substantially comprised between 1° and 10°.

In the illustrated example, the rear edge 135 is made from a plurality of uprights 140, each of which can be fixed to the end of a corresponding horizontal bar 130, forming a square-shaped bracket with the latter.

The uprights 140 and/or the horizontal bars 130 of the various brackets can be connected together through cross-members, so as to make the shelf 120 more rigid and stable overall.

However, this does not rule out the possibility that, in other embodiments, the rear edge 135 can be made in another way and/or that it can be replaced by a wall, for example by a wall of a building or of another structure in which the storage warehouse 105 is contained.

In any case, the rear edge 135 and the support plane 125 (ideally) define an inner dihedral angle substantially equal to 90°, the edge or vertex of which is (ideally) defined precisely by the intersection line between the rear edge 135 and the support plane 125.

This edge is preferably rectilinear and has a predetermined longitudinal extension, which substantially coincides with the length of the rear edge 135 and of the support plane 125 whereas it can be greater both with respect to the height of the rear edge 135 and with respect to the width of the support plane 125.

In this way, the shelf 120 can actually be delimited exclusively by the support plane 125 and by the rear edge 135, and instead be open and free on top, at the front, i.e. on the opposite side of the rear edge 135, and laterally, i.e. in a direction parallel to the edge of the aforementioned dihedral angle.

In the shelf 120, each ceramic slab L is preferably arranged resting on the support plane 125, inside the dihedral angle defined by the latter with the rear edge 135.

Preferably, every ceramic slab L is arranged with one of the lateral flanks (for example one of the smaller ones) resting on and in contact with the support plane 125 and with one of the main faces (for example the resting one) resting on (but not necessarily in contact with) the rear edge 135.

In this way, each ceramic slab L in the shelf 120 is oriented substantially vertically or slightly inclined, for example by about 3°, allowing better exploitation of the space available.

In particular, in the shelf 120 it is possible to arrange a plurality of ceramic slabs L distributed in horizontal piles, wherein each pile comprises a group of ceramic slabs L stacked on top of one another along a horizontal direction and substantially perpendicular to the rear edge 135, and wherein the various horizontal piles are side-by-side along a parallel direction with respect to the edge of the dihedral angle formed between the rear edge 135 and the support plane 125.

In this way, the first ceramic slab L of each horizontal pile can rest directly, with one of the main faces thereof, against the rear edge 135 (for example in contact with it), possibly having a small inclination with respect to the vertical plane, whereas the other ceramic slabs L of the same horizontal pile can be rested on top of one another (in mutual contact). In particular, the other ceramic slabs L of the same horizontal pile can each rest with a main face thereof on the opposite main face of the ceramic slab L immediately behind (i.e. closest to the rear edge 135).

Each horizontal pile is preferably formed from ceramic slabs L of the same type, of the same format and of the same or analogous surface finish, i.e. from ceramic slabs L that are homologous (same shape and size) and/or homogeneous (same appearance and/or decoration and/or surface finish) and/or of the same production batch.

The ceramic slabs L of two adjacent horizontal piles can, on the other hand, be different from each other.

By virtue of this arrangement, the height of the rear edge 135 is generally a function of the size of the lateral flanks of the ceramic slabs L that must be stored.

The width of the support plane 125 is generally a function of the thickness and of the maximum number of ceramic slabs L that make up each horizontal pile.

Whereas the total length of the shelf 120, in a direction parallel to the edge of the dihedral angle, is generally a function of the size of the lateral flanks of the ceramic slabs L and of the number of horizontal piles that are wished to be lined up on said shelf 120.

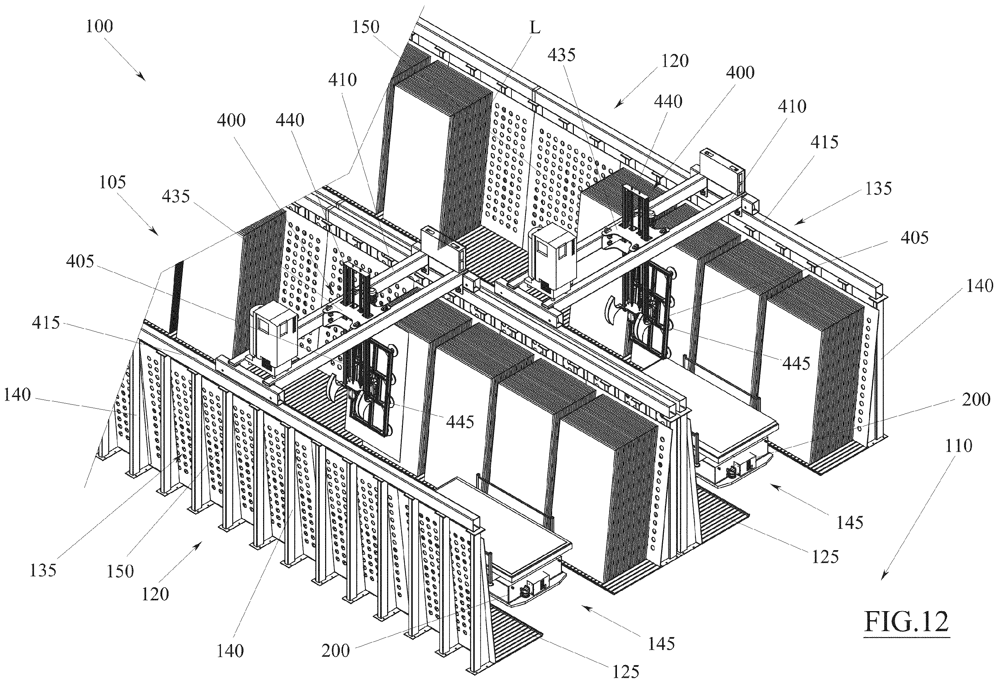

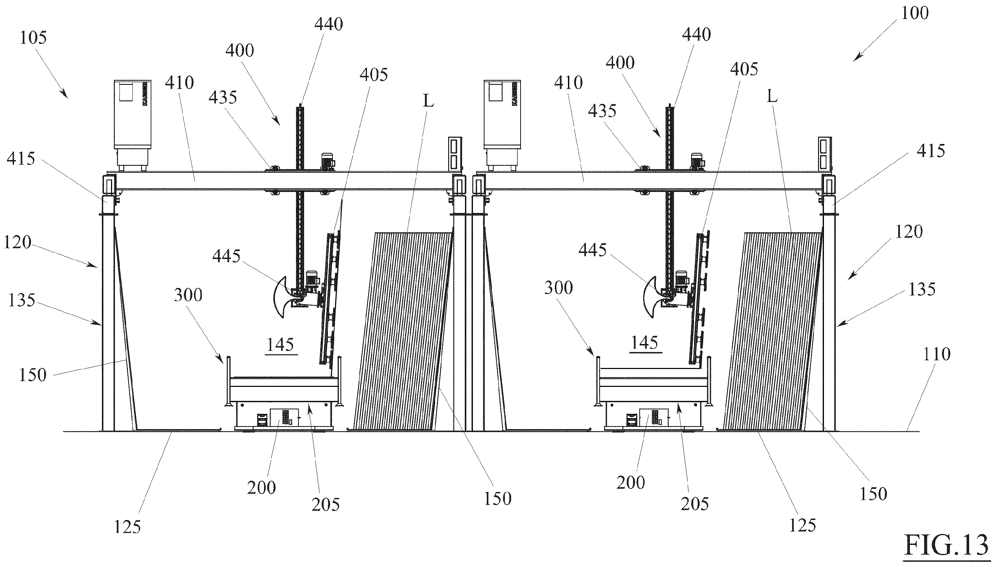

In some embodiments, the uprights 140 can be fixed to panels 150 (illustrated only in the example of figure 12 and 13 but also applicable to the other cases), facing towards the inside of the (smaller) dihedral angle, which are adapted for defining a substantially continuous support surface for the back of the ceramic slabs L.

These panels 150 can make a complete coating of the uprights 140 or only of a limited band thereof, for example at least at the support area of the slabs L.

The vertical extension of this band can of course be selected so that it is suitable for receiving ceramic slabs L of all the sizes that are intended to need to be stored.

The storage warehouse 105 also comprises an aisle 145, which is substantially defined by a portion of the floor 110 that extends beside the shelf 120, preferably along a rectilinear longitudinal direction and parallel to the edge of the dihedral angle formed between the support plane 125 and the rear edge 135.

In particular, the aisle 145 can extend in the longitudinal direction for the entire length of the shelf 120.

The width of the aisle 145 in the transversal direction to the longitudinal direction is selected so as to allow the passage and the operations of the means that allow the release and the picking up of the ceramic slabs L in/from the shelf 120 and that will be described hereinafter.

Preferably, the aisle 145 can be arranged between a pair of shelves 120, which are arranged parallel to one another, opposite but distanced in the transversal direction with respect to the edges of the respective dihedral angles.

In this way, the transversal distance between these shelves 120 actually defines the width of the aisle 145.

Preferably, the two shelves 120 of the pair face one another, i.e. the (smaller) dihedral angle of each of them faces towards the (smaller) dihedral angle of the other.

In this way, the means that operate inside the aisle 145 can release and pick up the ceramic slabs L on/from each of the shelves 120 that form the pair.

For example, the shelves 120 of the pair can be symmetrical to one another with respect to a vertical plane, parallel to the longitudinal axis of the aisle 145 and passing through the middle thereof.

Although in the illustrated example it is possible to see a single pair of shelves 120 between which a single aisle 145 is defined, the storage warehouse 105 can of course comprise a plurality of said pairs of shelves 120, which can be arranged parallel to one another and side-by-side, each providing a respective aisle 145.

In other words, the storage warehouse 105 can comprise a plurality of aisles 145, parallel and side-by-side, each of which is defined between a respective pair of shelves 120.

The embodiment illustrated in figures 12 and 13 shows for example two aisles 145 that are parallel to one another and side-by-side but it is clear that the storage warehouse 105 could comprise a greater number of aisles 145 and that this applies for all the embodiments of the present invention.

The apparatus 100 also comprises one or more self-propelled trolleys 200 adapted for transporting ceramic slabs L, moving on the floor 110.

Each self-propelled trolley 200 is preferably an automated guided vehicle (AGV). Moreover, the self-propelled trolley 200 is preferably a vehicle without guide rails, i.e. a vehicle that is not mechanically coupled with any physical rail that determines the path thereof.

For example, the self-propelled trolley 200 can implement an automated guiding system selected in the group consisting of: a laser guiding system, a radio guiding system (for example wired), a magnetic guiding system (for example using magnets or magnetic bands), an optical guiding system (for example using a coloured band or artificial viewing), an inertia guiding system (for example gyroscopic), a GPS guiding system.

The self-propelled trolley 200 will not be described in greater detail, since it is sufficient to remember that it can comprise a moving group, for example comprising one or more wheels for resting on the ground, a propulsion group, for example electrical, equipped with a battery power supply, for example using a lithium battery system, and can be guided by an electronic control system that implements the automated guiding system and that thus allows it to follow preassigned paths, to avoid collisions with other self-propelled trolleys 200 or other fixed or mobile obstacles present in the work space and to carry out transportation and parking operations of loads, i.e. of the ceramic slabs L.

In the illustrated example, each self-propelled trolley 200 is configured so as to be capable of transporting a pallet 300 on which one or more ceramic slabs L can be loaded.

The pallet 300 generally comprises a horizontal platform 305 and a plurality of support feet 310 adapted for resting on the floor 110, keeping the platform 305 at least slightly raised.

The ceramic slabs L can be loaded onto the pallet 300 so as to rest, directly or indirectly, on the platform 305 with one of the main faces thereof, for example with the supporting one, so as to take up a horizontal orientation.

For example, it is possible to load a pile of ceramic slabs L onto the pallet 300, stacked on top of one another in the vertical direction.

The self-propelled trolley 200 can be equipped with one or more loading elements 205 adapted for supporting the pallet 300.

In the example shown, the self-propelled trolley 200 has a very thin configuration, which makes it suitable for being positioned completely below the pallet 300, and the loading elements 205 are arranged directly at the top of the self-propelled trolley 200.

However, this does not rule out the possibility that, in other embodiments, the loading elements 205 can comprise forks or other bodies that project laterally with respect to the self-propelled trolley 200, which could be larger in size and remain outside the pallet 300. In some embodiments, the self-propelled trolley 200 could be configured to be able to slot the relative loading elements 205 below the platform 305 of the pallet 300, even when the support feet 310 are still in contact with the floor 110, and could thus be equipped with suitable moving means adapted for moving said loading elements 205 in the vertical direction, to lift and lower the pallet 300 with respect to the floor 110, allowing the transportation thereof.

In any case, this does not rule out the possibility that, instead of a pallet 300 adapted for supporting the ceramic slabs L oriented horizontally, the self-propelled trolley 200 can be adapted for transporting a rack or another support adapted for supporting the ceramic slabs L in substantially vertical position (or slightly inclined with respect to the vertical in order to prevent the tipping over thereof), i.e. resting on one of the lateral flanks thereof.

Finally, this also does not rule out the possibility that in other embodiments the ceramic slabs L or the piles of ceramic slabs L, oriented horizontally or vertically, can be loaded directly on the self-propelled trolley 200, for example on the loading elements 205, without the interposition of any pallet 300 or other intermediate support.

The apparatus 100 also comprises at least one manipulator 400 configured to releasably pick up a ceramic slab L, for example one ceramic slab L at a time, from the self-propelled trolley 200 and deposit it on a shelf 120 of the storage warehouse 105.

The manipulator 400 can be configured to also carry out the reverse operation, i.e. to releasably pick up a ceramic slab L, for example one ceramic slab L at a time, from the shelf 120 of the storage warehouse 105 and deposit it on the self-propelled trolley 200. For example, the apparatus 100 can comprise at least one manipulator 400 for each aisle 145 of the storage warehouse 105, so that each manipulator 400 can singularly operate with two shelves 120 facing one another.

In the illustrated example, the manipulator 400 is an anthropomorphous robot, for example an anthropomorphous robot having at least six degrees of freedom, the end (wrist) of which carries a gripping member 405 adapted for gripping and (releasably) holding one ceramic slab L at a time.

However, this does not rule out the possibility that, in other embodiments, the manipulator 400 can be another type of robot, for example a Cartesian robot, which moves the gripping member 405.

The gripping member 405 can be of the suction cup type and have, for example, a rigid frame, for example able to be configured differently (pantograph-shaped or other), which carries one or more suction cups defining a holding plane, each configured to releasably adhere (for example upon command imposed), by suction effect, to a main surface of a (single) ceramic slab L.

However, this does not rule out the possibility that, in other embodiments, the gripping member 405 can be of the mechanical type, for example equipped with gripper or clamp means that, actuated by suitable actuators, are capable of gripping a (single) ceramic slab L, for example clamping it along at least two opposite lateral flanks.

In any case, the manipulator 400 is preferably installed on a respective support trolley 410, which allows it to move inside the storage warehouse 105.

In particular, the support trolley 410 allows the manipulator 400 to move inside the respective aisle 145, at least along the longitudinal direction thereof, for example for the entire length thereof.

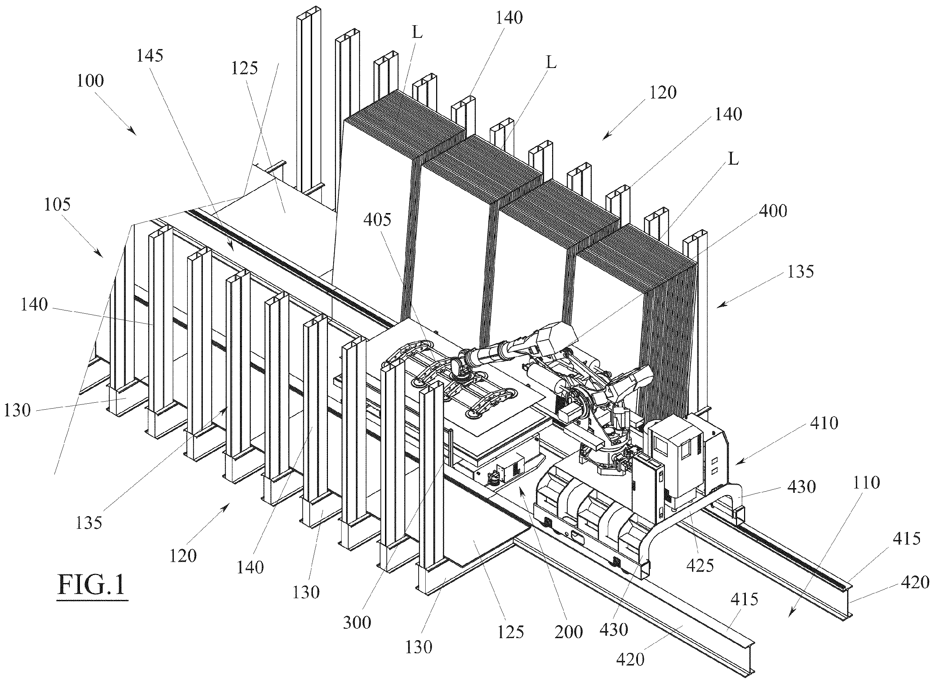

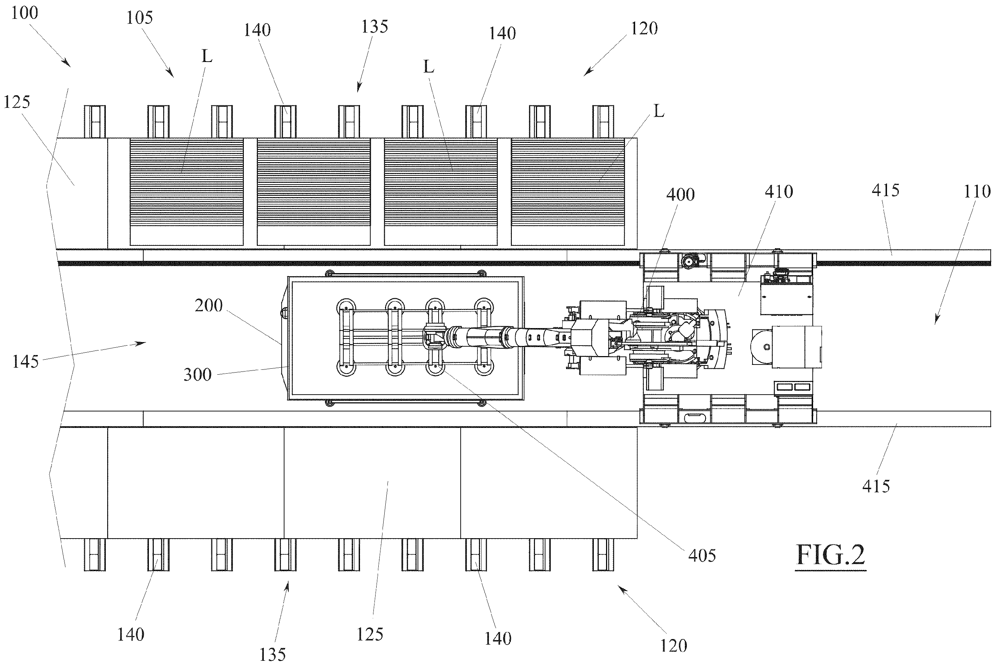

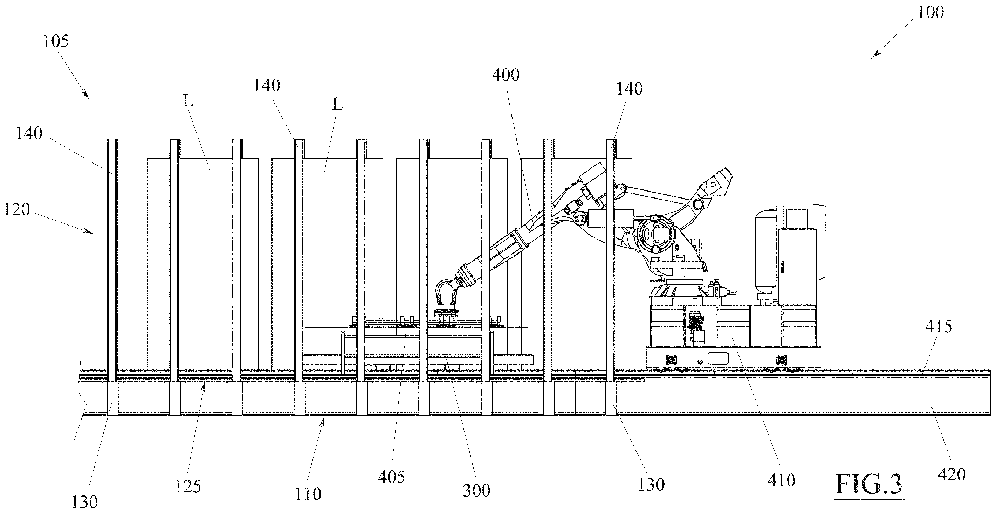

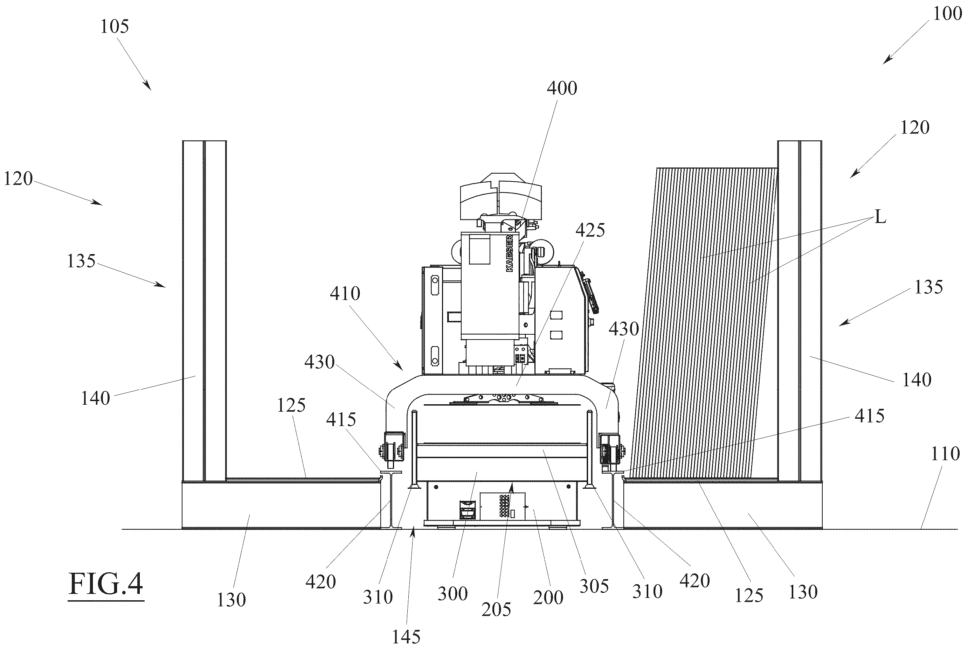

In the embodiment illustrated in figures 1 to 4, the support trolley 410 is a vehicle on rails, i.e. a vehicle mechanically coupled with the at least one physical rail that determines the path thereof.

In particular, in this example, the support trolley 410 is coupled with a pair of rails 415 fixed onto the floor 110, preferably inside the respective aisle 145.

The rails 415 are oriented parallel to the longitudinal direction of the respective aisle 145 and have a length at least equal to the length of the latter or greater.

Each rail 415 is preferably arranged close to a respective shelf 120, so that the transversal distance that separates them is sufficiently great as to allow the passage of at least one of the self-propelled trolleys 200 that carry the ceramic slabs L.

Therefore, such a transversal distance is generally greater than the transversal bulk of a self-propelled trolley 200, also considering the possible pallet 300 and the ceramic slabs L transported in it.

Each rail 415 can be kept at least slightly distanced from the floor 110, for example defining it or installing it above a respective side member 420 that extends parallel to it. The support trolley 410 is slidably coupled with and constrained to the rails 415 through suitable wheels or blocks.

The support trolley 410 can have a horizontal platform 425, which passes over the aisle 145 and above which the manipulator 400 is installed.

Preferably, the horizontal platform 425 can be positioned a sufficiently great distance from the floor 110 so that a self-propelled trolley 200, empty or possibly with a pallet 300 loaded on it, can pass freely beneath it.

In other words, the minimum distance between the horizontal platform 425 of the support trolley 410 and the floor 110 is greater than the maximum height of the self-propelled trolley 200 or, more preferably, than the maximum vertical bulk of the self-propelled trolley 200 with a pallet 300 loaded on it (the pallet 300 being able to be empty or in turn loaded with a certain number of ceramic slabs L).

In order to obtain this effect, the support trolley 410 can have a bridge structure that, as well as the horizontal platform 425, also has a pair of lateral flanks 430, arranged at the transversal ends of the horizontal platform 425, which extend vertically and each of which couples, through respective blocks or wheels, with a corresponding rail 415.

The sliding of the support trolley 410 along the rails 415 is actuated by suitable actuator members, for example by a rack system actuated by one or more electric motors, which are not illustrated since they are *per se* conventional.

In the alternative embodiment illustrated in figure 5, the support trolley 410 of each manipulator 400 is coupled and suspended, like a gantry crane, with a pair of rails 415 oriented parallel to the longitudinal direction of the respective aisle 145 and fixed to the cover 115 of the storage warehouse 105.

The pair of rails 415 for example have a length substantially equal to or greater than the length of the respective aisle 145 and can both be arranged above the latter, so as not to take up the space above the shelves 120.

The support trolley 410 has a pair of sliding blocks, each of which is slidably coupled with a respective rail 415, for example through a dovetail coupling, so as to be able to slide along it remaining fastened to it.

Also in this case, the actuation into sliding of the support trolley 410 is entrusted to suitable actuator members, not shown since they are *per se* conventional, for example by one or more electric motors.

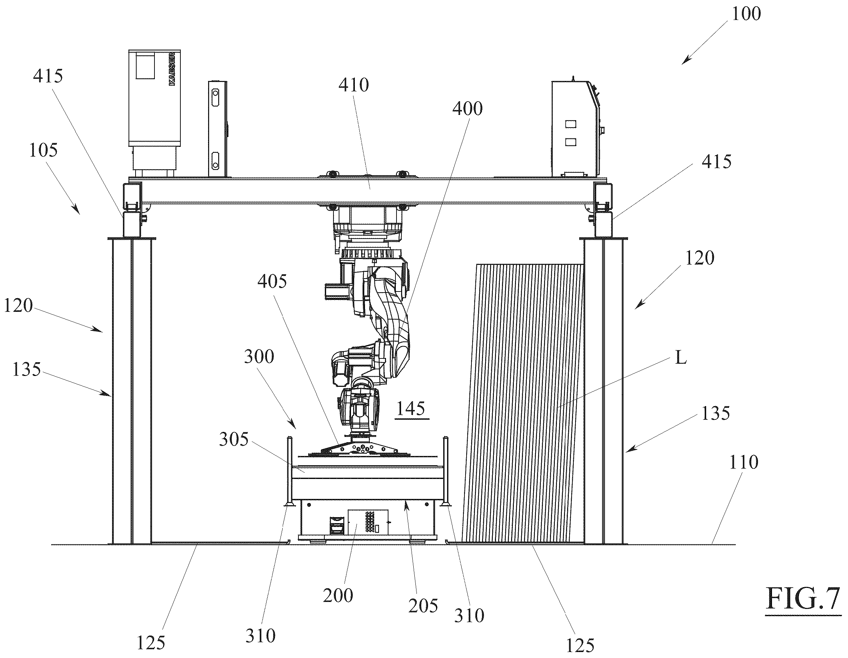

In the embodiment illustrated in figures 6 and 7, the rails 415 are oriented parallel to the longitudinal direction of the aisle 145 and are fixed above the shelves 120.

In particular, each rail 415 can be fixed above the rear edge 135 of a respective shelf 120 of the pair of shelves 120 that delimit the aisle 145, for example fixed above the uprights 140 that define said rear edge.

However, this does not rule out the possibility that, in other embodiments, the rails 415 are fixed to dedicated structures that are separate with respect to the shelves 120 or directly to a ceiling of the store 100.

In this embodiment, the support trolley 410 for the manipulator 400 is configured like a gantry crane and is slidably coupled with the rails 415, so as to be able to move in the longitudinal direction along the corresponding aisle 145.

Extending horizontally like a bridge between the two rails 415, the support trolley 410 passes over the aisle 145 and carries the manipulator 400 at the middle thereof.

In the illustrated embodiment, the manipulator 400 is rigidly fixed to the support trolley 410 but this does not rule out the possibility that, in other embodiments, the manipulator can slide on-board the support trolley 410 in the transversal direction with respect to the aisle.

Also in this embodiment, the manipulator 400 is an anthropomorphous robot, without for this reason ruling out the possibility that it can be replaced by a Cartesian robot or by any other type of robot equipped with a gripping member 405 for the slabs L.

Finally, it should be observed that, in the example illustrated in figures 6 and 7, the support plane 125 of the shelves 120 is defined by one or more covering panels rested directly on the floor 110.

In other embodiments, the covering panels could however be absent and the support plane 125 could be directly defined by a portion of the floor 100, or the support plane 125 could be defined above horizontal bars 130 as described earlier.

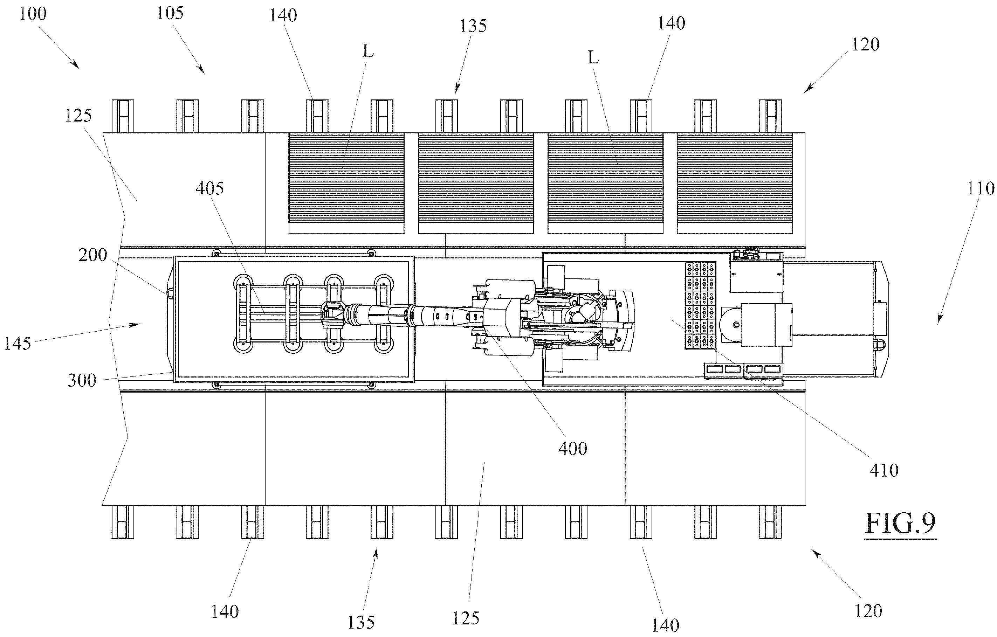

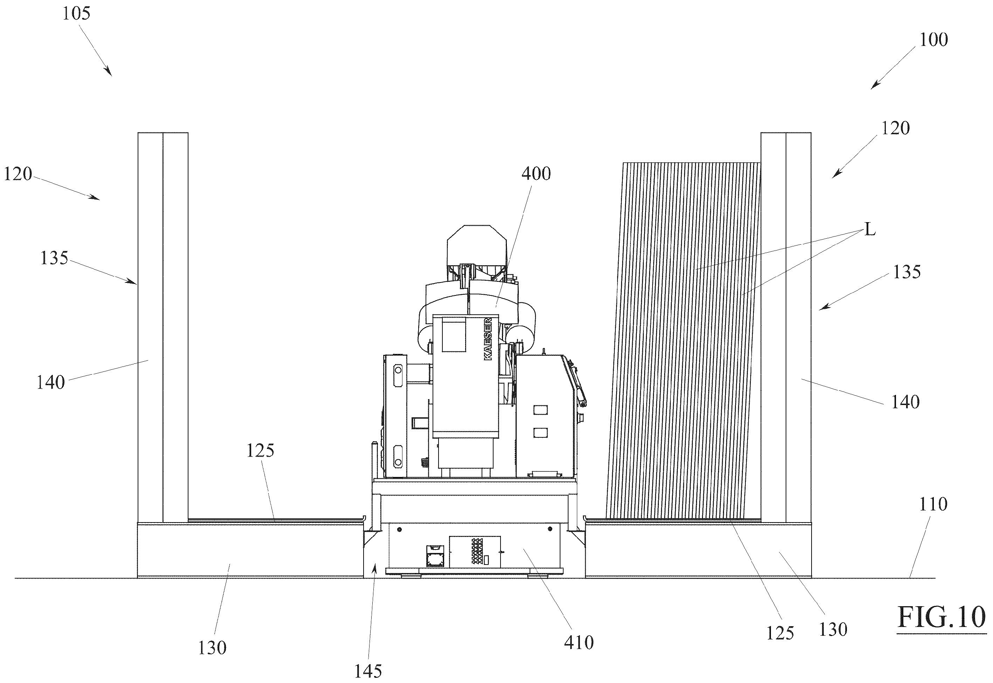

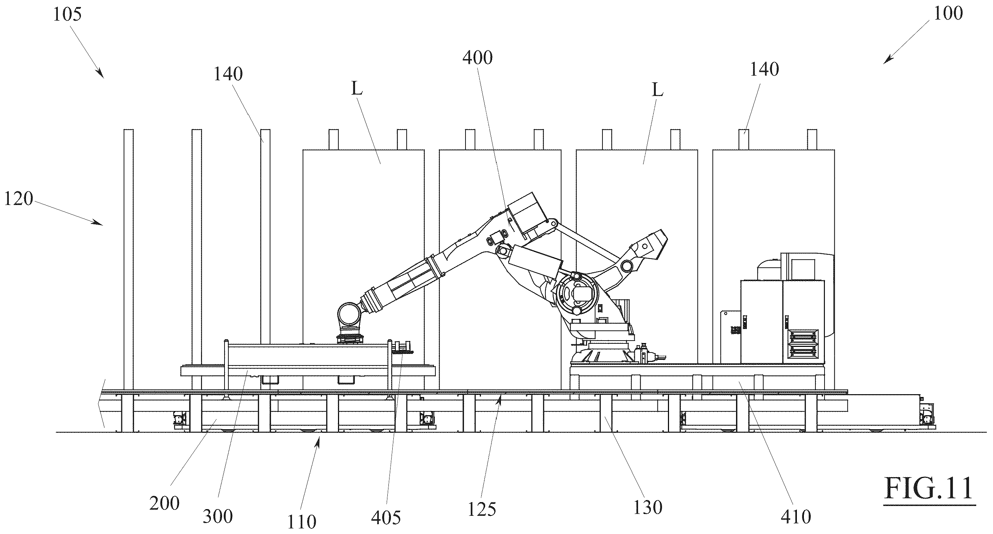

In a third alternative embodiment illustrated in figures 8 to 11, the support trolley 410 can also be a vehicle without guide rails, i.e. a vehicle that is not mechanically coupled with any physical rail that determines the path thereof.

In particular, the support trolley 410 can be a driverless automated guided vehicle (AGV), substantially of the same type as those used to make the self-propelled trolleys 200.

The support trolley 410 can also implement for example an automated guiding system selected from the group consisting of: a laser guiding system, a radio guiding system (for example wired), a magnetic guiding system (for example using magnets or magnetic bands), an optical guiding system (for example using a coloured band or artificial viewing), an inertia guiding system (for example gyroscopic), a GPS guiding system.

The fourth embodiment illustrated in figures 12 and 13 is substantially analogous to that of figures 6 and 7, from which it differs in practice only by the configuration of the manipulator 400.

Also in this case, indeed, the support trolley 410 is shaped like a gantry crane slidably coupled with a pair of rails 415, which are oriented parallel to the longitudinal direction of the aisle 145 and are for example but not necessarily fixed above the shelves 120 that delimit the aisle 145 itself.

Instead of an anthropomorphous robot, the manipulator 400 is however shaped like a Cartesian robot.

In particular, the Cartesian robot comprises a second trolley 435, which is slidably installed on the support trolley 410, i.e. on the gantry crane, so as to slide on the latter along a horizontal direction and perpendicular to the longitudinal direction of the aisle 145.

The Cartesian robot also comprises an upright 440, which is slidably installed on the second trolley 435, so as to be able to slide in the vertical direction, and has a lower end that can project below the support trolley 410.

The gripping member 405 can be connected to the upright 440, for example at the lower end thereof.

In particular, the gripping member 405 can be connected to the upright 440 through a knuckle joint 445, which allows it to rotate, with respect to the upright 440, about at least one horizontal rotation axis and parallel to the longitudinal direction of the aisle 145. However, this does not rule out the possibility that, in other embodiments, the knuckle joint 445 can be configured to allow the gripping member 405 to rotate about a plurality of axes, for example about two mutually-perpendicular horizontal axes and/or about a further vertical axis.

The movement of the gripping member 405 with respect to the upright 440, of the upright 440 with respect to the second trolley 435 and of the second trolley 435 with respect to the support trolley 410 (gantry crane), are actuated through corresponding actuation devices (e.g. motors and transmission systems) that are not described in detail since they are *per se* conventional.

In all of the cases described above, the apparatus 100 finally comprises an electronic control system (not illustrated), which is configured to manage the apparatus 100 in a (completely or at least partially) automated manner.

For example, the electronic control system can be operatively connected to each self-propelled trolley 200, to manage the operativity and the operating, movement and parking steps according to a predetermined control cycle.

Moreover, the electronic control system can be operatively connected to the manipulator 400 and to the relative support trolley 410, to manage the operativity and the operating, movement and parking steps according to a predetermined control cycle thereof (coordinated with the operation of each self-propelled trolley 200).

The electronic control system can also comprise a user interface, through which the user can interact for the management of storage sequences and picking up (and order) sequences of the ceramic slabs L, i.e. to programme and manage the interchange of ceramic slabs L between the self-propelled trolleys 200 and the storage warehouse 105.

A possible automatic operation of the apparatus 100, for example carried out through suitable programming of the aforementioned electronic control system, is described hereinafter.

After the usual forming and firing steps, the ceramic slabs L can be loaded one at a time onto a pallet 300, so as to form a pile of ceramic slabs L oriented horizontally and stacked in the vertical direction.

This loading of the ceramic slabs L can take place manually or, more preferably, in an automated manner, for example through suitable robots operated by the electronic control system.

After loading, the pallet 300 can be raised and taken on-board a self-propelled trolley 200. Alternatively, the ceramic slabs L could be loaded onto the pallet 300 after it has already been positioned on the self-propelled trolley 200.

As stated earlier, it is also not ruled out for the pallet 300 to be able to be replaced by racks or other types of support, on which the ceramic slabs L can be loaded with a vertical orientation or at least slightly inclined and possibly stacked in the horizontal direction.

Nor is it ruled out for the ceramic slabs L, however oriented and possibly stacked, to be able to be loaded directly on the loading members 205 of the self-propelled vehicle 200, thus making the use of pallets 300 and of other intermediate supports superfluous.

In any case, after loading, the ceramic slab(s) L are transported by the self-propelled trolley 200 towards an aisle 145 of the storage warehouse 105, and possibly inside said aisle 145, until it goes near to the respective manipulator 400, which can meanwhile have been positioned, thanks to the sliding of the support trolley 410, at a longitudinal segment of the shelf 120 intended to receive the ceramic slabs L.

Of course, the choice of the aisle 145, of the shelf 120 and of the longitudinal position along the shelf 120 can be carried out automatically by the electronic control system based on programming.

When the self-propelled trolley 200 has reached the predetermined position, the manipulator 400 can be commanded so as to pick up one ceramic slab L at a time from the self-propelled trolley 200, orient it suitably and finally deposit it inside the shelf 120. In particular, the manipulator 400 can be configured to deposit each ceramic slab L so that it rests a lateral flank thereof on the support plane 125 of the shelf 120 and one of the main faces on the rear edge, according to the orientation and mode of accumulation already described earlier.

In particular, if the shelf 120 (in the predetermined longitudinal segment) is still empty, then the manipulator 400 can rest the main face of the ceramic slab L against the rear edge 135.

If, on the other hand, the shelf 120 (in the predetermined longitudinal segment) is already occupied by one or more ceramic slabs L, then the manipulator 400 can rest the main face of the ceramic slab L against the previous ceramic slab L, i.e. the one closest to the aisle 145.

In practice, the manipulator 400 can be configured to stack one ceramic slab L at a time along a horizontal stacking direction perpendicular to the rear edge 135.

Once the self-propelled trolley 200 has been emptied, it can be brought outside of the aisle 145 and taken away from the storage warehouse 105, to possibly be loaded with further ceramic slabs L and repeat the cycle described previously.

Of course, the apparatus can also be operated to carry out the reverse process, for example if it is necessary to pick up one or more ceramic slabs L from the storage warehouse 105 to bring it into an operative area, for example into a packaging and delivery area or into an area in which the ceramic slabs L are subjected to further processing, in particular but not necessarily into a cutting area in which the ceramic slabs L are divided into smaller tiles.

For this purpose, after having established the shelf 120 on which the ceramic slab(s) L to be picked up is/are located, the corresponding manipulator 400 can be moved along the respective aisle 145, thanks to the movement of the respective support trolley 410, until it is positioned at the longitudinal segment of the shelf 120 in which the ceramic slab(s) L to be picked up is/are actually located.

meanwhile, a self-propelled trolley 200, possibly equipped with a pallet 300 or with another empty support, can be sent to the storage warehouse 105 and made to advance along the aisle 145, until it is positioned close to the manipulator 400.

At this point, the manipulator 400 can pick up one ceramic slab L at a time from the shelf 120 and deposit it on the self-propelled trolley 200, according to the same methods described earlier.

When all of the required ceramic slabs L have been loaded, the self-propelled trolley 200 is actuated to transport them outside of the storage warehouse 105 and towards their destination.

Of course, those skilled in the art can bring numerous technical-application modifications to everything described above, without for this reason departing from the scope of the invention as claimed below.

## Claims

1. A method for storing slabs (L) singularly equipped with two opposite main faces and with a plurality of lateral flanks, wherein the method comprises the steps of:
- loading at least one slab (L) on a self-propelled trolley (200),
- carrying said slab (L) through the self-propelled trolley (200) to a storage warehouse (105),
- picking up the slab (L) from the self-propelled trolley (200) through a manipulator (400), and
- depositing the slab (L) on a shelf (120) of the storage warehouse (105) through the manipulator (400).

2. A method according to claim 1, wherein the self-propelled trolley (200) is a vehicle without guide rails.

3. A method according to claim 1 or 2, wherein the self-propelled trolley (200) is an automated guided vehicle.

4. A method according to any one of the previous claims, wherein the slab (L) is loaded onto the self-propelled trolley (200) sitting resting on one of its main faces.

5. A method according to any one of the previous claims, wherein the step of depositing the slab (L) on the shelf (120) provides for putting the slab (L) to rest on one of its lateral flanks.

6. A method according to any one of the previous claims, wherein the storage warehouse (105) comprises at least two shelves (120) arranged mutually adjacent and separated by an aisle (145),
the step of carrying the slab (L) to the storage warehouse (105) providing for guiding the self-propelled trolley (200) to move inside and along said aisle (145),
the slab (L) being able to be picked up and deposited by the manipulator (400) on each of the shelves (120) that delimit said aisle (145).

7. A method according to any one of the previous claims, wherein the manipulator (400) is a robot equipped with a gripping member (405) to grasp and hold the slab (L).

8. A method according to claim 7, wherein the robot is an anthropomorphous robot or a Cartesian robot.

9. A method according to claim 7 or 8, wherein the robot is installed on a support trolley (410) that is mobile with respect to the storage warehouse (105).

10. A method according to claim 6 and 9, wherein said support trolley (410) is mobile inside and along the aisle (145) delimited by the shelves (120).

11. A method according to claim 9 or 10, wherein said support trolley (410) is a vehicle on rails.

12. A method according to claim 9 or 10, wherein said support trolley (410) is a vehicle without guide rails.

13. A method according to claim 11 or 12, wherein said support trolley (410) is an automated guided vehicle.

14. The method according to any one of the previous claims, comprising the further steps of:
- picking up a slab (L) from the storage warehouse (105) with the manipulator (400);
- depositing the slab (L) on the self-propelled trolley (200) with the manipulator (400), and
- transporting the slab (L) through the self-propelled trolley (200) away from the storage warehouse (105).

15. The method according to any of the preceding claims, wherein the storage warehouse (105) comprises at least two shelves (120) arranged mutually adjacent and separated by an aisle (145), wherein the method comprises the step of guiding the self-propelled trolley (200) to move inside and along said aisle (145), and wherein the manipulator is a robot (400) which is equipped with a gripping member (405) to grasp and hold the slab (L) and is installed on a support trolley (410) that, being shaped like a gantry crane, passes over the aisle (145) delimited by the shelves (120) and is slidably coupled with a pair of rails (415) individually oriented parallel to a longitudinal direction of the aisle (145) and fixed above the shelves (120).

16. The method according to claim 15, wherein the rails (415) are fixed to dedicated structures that are separate with respect to the shelves (120).

17. An apparatus (100) for storing slabs (L) singularly equipped with two opposite main faces and with a plurality of lateral flanks, wherein said apparatus comprises:
- a storage warehouse (105),
- a self-propelled trolley (200) adapted for being loaded and for carrying one or more slabs (L),
- a manipulator (400) adapted for releasably picking up a slab (L) from the self-propelled trolley (200), and
- an electronic control system of the self-propelled trolley (200) and of the manipulator (400) and configured to carry out the steps of the method according to any one of the previous claims.

18. The apparatus (100) according to claim 17, wherein the storage warehouse (105) comprises at least two shelves (120) arranged mutually adjacent and separated by an aisle (145), wherein the self-propelled trolley (200) is adapted for moving inside and along said aisle (145), and wherein the manipulator is a robot (400) which is equipped with a gripping member (405) to grasp and hold the slab (L) and is installed on a support trolley (410) that, being shaped like a gantry crane, passes over the aisle (145) delimited by the shelves (120) and is slidably coupled with a pair of rails (415) individually oriented parallel to a longitudinal direction of the aisle (145) and fixed above the shelves (120).
